# EUROPEAN PATENT APPLICATION

(11) **EP 2 093 088 A2**
(43) Date of publication of application: **26.08.2009**
(21) Application number: 09381006.7
(22) Date of filing: 18.02.2009
(51) Int. Cl.: B60K 6/28, B60K 16/00, B60L 8/00, B63H 9/00, F02B 67/06, F16H 7/00

(54) **Multi-purpose mixed-power vehicle**

(30) Priority: 21.02.2008 ES 200800491
(71) Applicant: Casanova Pérez, Gregorio, 50012 Zararoza (ES); Casanova Pérez, Maria Mercedes, 50012 Zaragoza (ES); Casanova Pérez, Elena Maria, 50012 Zaragoza (ES)
(72) Inventor: Casanova Pérez, Gregorio, 50012 Zararoza (ES); Casanova Pérez, Maria Mercedes, 50012 Zaragoza (ES); Casanova Pérez, Elena Maria, 50012 Zaragoza (ES)
(74) Representative: Martin Santos, Victoria Sofia

(57) **Abstract**

The present invention relates to a multipurpose mixed-power vehicle. By vehicle is meant any element that is able to travel from one place to another, whether on the land, sea or in the air. The vehicle has at least one rechargeable electric battery and means that contribute to recharging the battery using wind power, integrating on its external surface suitable wind capture devices. For this purpose, the vehicles comprises wind power generators placed in connection to alternators that feed the electric batteries. In this way a system for recharging the batteries is obtained that allows using the wind impacting on a vehicle in motion to transform it into electric power and thereby help to recharge the batteries.

## Description

### OBJECT OF THE INVENTION

The present invention relates to a multi-purpose mixed-power vehicle. By vehicle is meant any element that is able to move from one place to another, whether in land, sea or air.

The vehicle has at least one rechargeable electric battery and means that contribute to recharging the battery by wind power, integrating on its exterior surface suitable wind capture devices. For this purpose, the vehicle has wind-power generators placed in connection with alternators that feed the electric batteries.

This provides a battery recharging system that allows using the wind impacting on the vehicle in motion to transform it into electric power, thereby contribute to recharging the electric batteries.

### BACKGROUND OF THE INVENTION

Vehicles driven by electric power are known, such as electric cars, motorcycles or aeroplanes. These vehicles, which can be land, sea or air vehicles, generally need to recharge their batteries often as they have a limited range and low speeds.

It is also known that an air flow is generated on a vehicle in motion. This invention intends to use this energy to drive the vehicle itself. In addition, the vehicle can also have on its surface suitable solar capture devices to generate electric power, mainly for operating various elements of the vehicle such as lights, both internal and external, GPS devices or other devices.

These means therefore contribute to generate electric power that is used to recharge the batteries, thereby reducing the frequency needed for recharging them by other external or conventional means.

### DESCRIPTION OF THE INVENTION

The present invention relates to a multipurpose mixed-power vehicle.

The vehicle comprises on its external surface wind capture devices. In this way, the batteries have auxiliary means that contribute to recharging them, using wind power obtained when the vehicle is in motion.

For this purpose, the external surface comprises at least one wind power generator connected to an alternator that in turn charges the electric battery. In this way, the batteries are recharged when the vehicle is in motion. It is also possible for the wind power generator or windmill to have the alternator integrated in a single element. The invention encompasses any type of wind power generator or windmill in the various variants of pulleys or rotor blades. In addition, one or more generators can be used.

In addition, the vehicle can have solar capture devices on its surface, so that the electric power obtained from the solar capture devices can be used, for example, for the vehicle lights including the general lights and auxiliary illumination, or for other auxiliary equipment. In this way, the electric power used by these auxiliary devices of the vehicle does not use the electric power meant to drive the vehicle.

### DESCRIPTION OF THE DRAWINGS

The present descriptive memory is completed by a set of drawings that illustrate the preferred embodiment and in no way limit the invention.

Figure 1 is a schematic representation of an example of embodiment of a wind power generator module for a land vehicle, such as a car, that can be placed on the roof or on the underside of the chassis.

Figure 2 is a schematic representation of another example of embodiment of a wind power generator module on the roof or on the underside of the chassis, also for a land vehicle.

Figure 3 is a schematic representation of a third example of embodiment of a wind power generator module on the roof or on the underside of the chassis, also for a land vehicle.

Figure 4 is a schematic representation of an example of embodiment of a wind power generator module on the front part of the land vehicle.

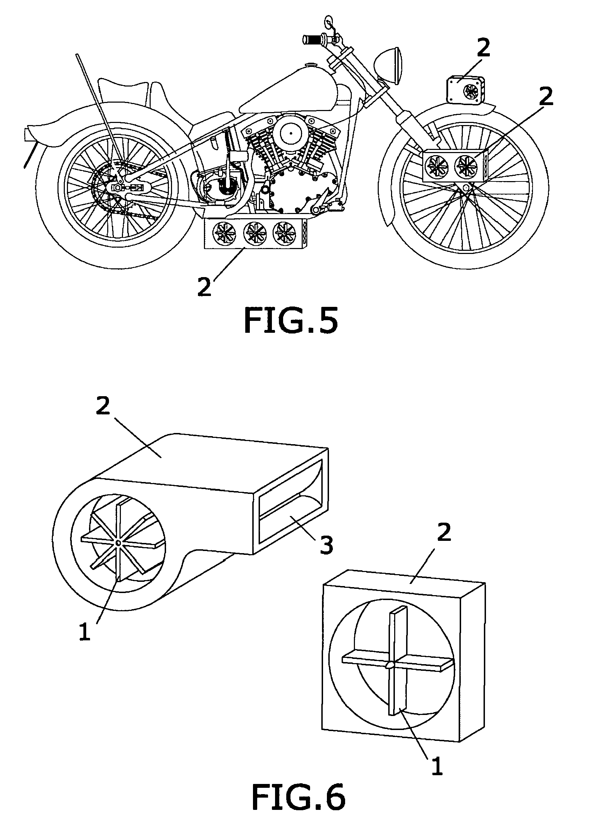

Figure 5 is a schematic representation of an example of embodiment consisting in an electric motorcycle having wind power generators both on its front and on the underside of the chassis.

Figure 6 shows schematic representations of two examples of embodiment of a module integrating a wind power generator.

### PREFERRED EMBODIMENT OF THE INVENTION

The accompanying figures show different embodiments of wind power generators (1) and their position on a land vehicle. These wind power generators (1) are placed on an independent module (2) attached to the vehicle. The wind power generators (1) can be placed under the chassis or on the roof of the vehicle, or in the front part of the vehicle, or a combination thereof.

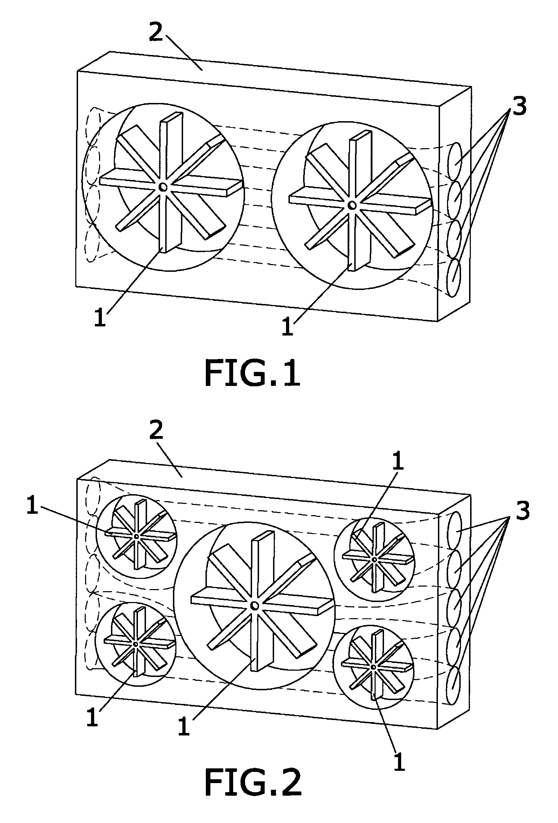

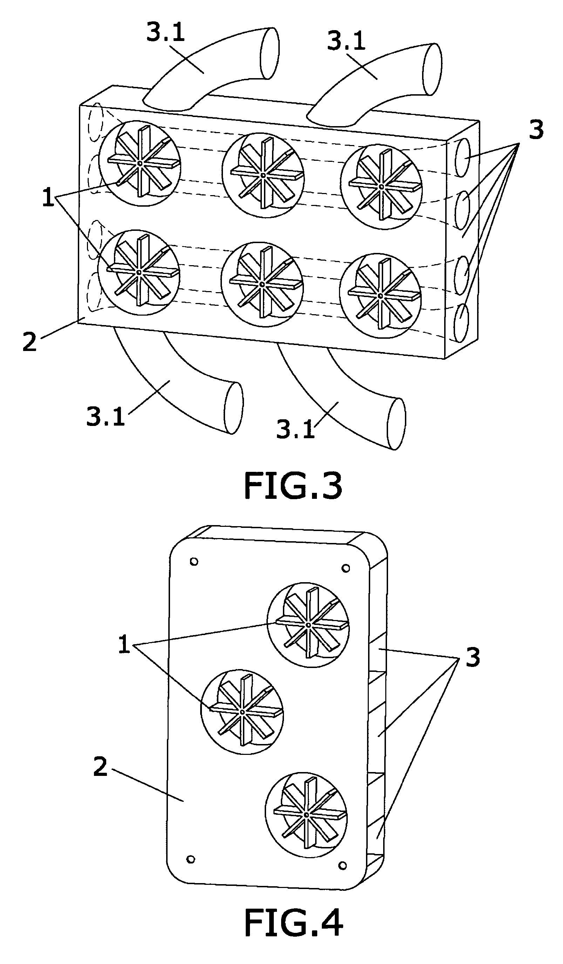

The embodiments of figures 1, 2 and 3 can be used both on the roof and on the underside of the chassis, the latter location being preferable. The embodiment of figure 4 is adequate for front locations, such as on cars or motorcycles.

In all embodiments it is possible to place air inlet nozzles (3) that direct the air towards the wind power generators (1) and increase the flow rate. Both the nozzles (3) and the cases of the module may be absent, leaving the blades exposed to any prevailing wind.

Figure 1 shows the case in which the module (2) comprises inlet nozzles (3) and corresponding wind power generators (1) placed in series. The module (2) can comprise several wind power generators (1) in any spatial arrangement.

In figure 2 the module (2) comprises five wind power generators (1), while in figure 3 it comprises six wind power generators (1) as well as auxiliary nozzles (3.1) on the sides of the module (2).

In the example of the embodiment it is also possible to have alternators driven by belts, which will be connected to any rotating element of the vehicle, not only the shafts of the wind power generators but also, for example, the wheel axles or other elements.

Each wind power generator (1) charges a different battery that is connected to the remaining batteries in series or parallel, constituting two sets, one that transmits the motion and one that is being charged. Between the batteries is a switch. The alternation degree can be adjusted by the user, so that the battery will reserve a minimum charge.

The system can also charge the two sets of batteries at all times and discharge only one using a load separator. In its simplest form, all the various charging mechanisms feed a single set or batteries or a single battery.

The wind power generators (1) can be blocked or their rotation sense can be inverted to aid in the vehicle braking operation wither automatically or at will, such as when pressing the brake pedal.

## Claims

1. Multipurpose mixed-power vehicle, comprising at least one rechargeable electric battery, **characterised in that** it comprises on the external surface of the vehicle a wind power generator (1) placed in connection with an alternator that in turns feeds the electric battery.

2. Multipurpose mixed-power vehicle, according to claim 1, **characterised in that** it comprises on the surface of the vehicle a solar capture device connected to an alternator, using the power generated for the lighting and other auxiliary elements of the vehicle other than to drive it.

3. Multipurpose mixed-power vehicle, according to claim 1, **characterised in that** the vehicle is a land, sea or air vehicle.

4. Multipurpose mixed-power vehicle, according to claim 3, **characterised in that** the wind power generator (1) is placed under the chassis or on the roof of the vehicle, or in the front part of the vehicle, or a combination thereof.

5. Multipurpose mixed-power vehicle, according to claim 1, **characterised in that** at least one nozzle (3) is placed feeding the wind power generator (1) to direct the air flow.

6. Multipurpose mixed-power vehicle, according to claim 5, **characterised in that** the wind power generator (1) and the nozzles (3) are placed on an independent module (2) joined to the vehicle.

7. Multipurpose mixed-power vehicle, according to claim 6, **characterised in that** the module (2) can comprise several wind power generators (1) in any spatial arrangement.

8. Multipurpose mixed-power vehicle, according to claim 1, **characterised in that** it comprises some alternators powered by belts connected to rotating elements of the vehicle.

9. Multipurpose mixed-power vehicle, according to claim 1, **characterised in that** it comprises an assembly of two sets of batteries, one of which transmits the motion while the other is charged.

10. Multipurpose mixed-power vehicle, according to claim 9, **characterised in that** between the two sets of batteries there is a switch.

11. Multipurpose mixed-power vehicle, according to claim 10, **characterised in that** it comprises means for regulating the minimum charge of the battery before switching.
